# EUROPÄISCHE PATENTSCHRIFT

(11) **EP 2 300 126 B1**
(45) Veröffentlichungstag und Bekanntmachung des Hinweises auf die Patenterteilung: **12.09.2018**
(21) Anmeldenummer: 09779686.6
(22) Anmeldetag: 09.06.2009
(51) Int. Cl.: B01D 47/02, B01D 47/06, B01D 53/50

(54) **ANLAGE UND VERFAHREN ZUR ABSORPTION VON SCHADSTOFFEN IN GASEN**
SYSTEM AND METHOD FOR THE ABSORPTION OF POLLUTANTS IN GASES
SYSTÈME ET PROCÉDÉ D'ABSORPTION DE SUBSTANCES NOCIVES PRÉSENTES DANS DES GAZ

(30) Priorität: 17.07.2008 AT 11132008
(43) Veröffentlichungstag der Anmeldung: 30.03.2011
(73) Patentinhaber: Andritz AG, 8045 Graz (AT)
(72) Erfinder: BÄRNTHALER, Klaus, 8010 Graz (AT); GRUBER-WALTL, Andreas, 8042 Graz (AT); REISSNER, Harald, 8071 Hausmannstätten (AT)
(74) Vertreter: Peham, Alois
(86) Internationale Anmeldenummer: PCT/EP2009/057105
(87) Internationale Veröffentlichungsnummer: WO 2010/006848

(56) Entgegenhaltungen:
- US-A- 3 834 129
- US-A- 4 263 021
- US-A- 4 820 456
- US-A- 5 527 496
- US-A1- 2007 251 393
- US-B1- 6 267 358
- US-B1- 6 273 940

## Beschreibung

Die Erfindung betrifft eine Anlage und ein Verfahren zur Absorption von Schadstoffen in Gasen.

Bei vielen industriellen Prozessen, insbesondere bei Verbrennungsprozessen entstehen Rauch- beziehungsweise Abgase, welche saure Komponenten wie Schwefeldioxid (SO2), Salzsäure (HCl), Fluorwasserstoff (HF) und/oder Stickoxide (NO, NO2) enthalten, die aufgrund ihrer Schädlichkeit für das Ökosystem als Schadstoffe bezeichnet werden.

Zum Schutz von Menschen, Tieren und Pflanzen wurden daher gesetzliche Bestimmungen für zulässige Grenzwerte an Schadstoffen in Abgasen erlassen.

Damit diese Grenzwerte eingehalten werden, ist in vielen Fällen eine Reinigung der Abgase erforderlich.

Aus dem Stand der Technik sind verschiedene Technologien zur sogenannten nassen Abgasbehandlung bekannt, die bereits industriell eingesetzt werden. Bei diesen Verfahren wird für die Abscheidung von Schadstoffen meist Kalziumsorbens (Kalkstein, Branntkalk und Kalkhydrat) verwendet. Diese Kalziumverbindungen werden mit Wasser angemischt, liegen danach als Suspension vor und werden mit den im Rauchgas vorliegenden sauren Gasen in Kontakt gebracht, sodass die Absorption der Schadstoffe von der gasförmigen in die flüssige Phase stattfinden kann. Die in die flüssige Phase absorbierten sauren Schadstoffe liegen danach gelöst in ionischer Form vor und reagieren mit den in der Suspension gelösten Kalzium Ionen des Kalksorbens.

Die sich daraus ergebenden Reaktionsprodukte können in Abhängigkeit der weiteren Prozessführung in der Suspension gelöst bleiben, bei entsprechender Übersättigung Kristalle bilden und schlussendlich sogar in fester Form ausfallen.

Der überwiegende Schadstoff in Abgasen, insbesondere bei öl- und kohlegefeuerten Verbrennungsprozessen ist Schwefeldioxid SO2.

In sogenannten Rauchgasentschwefelungsanlagen wird das SO2 aus dem Rauchgas mit den eingangs beschriebenen Verfahren abgetrennt, wobei als Kalziumsorbens hauptsächlich Kalkstein in Form einer Kalksteinsuspension eingesetzt wird. In diesen Anlagen entsteht aus dem absorbierten Schwefeldioxid SO2 und dem gelösten Kalkstein in der Suspension nach Oxidations- und Kristallisationsprozessen verwertbarer Gips (CaSO4 2H2O).

Aus dem Stand der Technik ist es bekannt, den Kontaktapparat für die Rauchgasentschwefelung als Sprühturm mit Tropfensäule auszuführen. In diesem Sprühturm wird die Kalksteinsupension über mehrere in der Regel horizontal angeordnete Sprühebenen und Sprühdüsen in einem vertikal rauchgas-durchströmten Apparat versprüht. Die aus der Sprühdüse austretenden Kalksteinsupensionstropfen treten mit dem strömenden Rauchgas in Kontakt und es kommt zu Wärme- und Stofftransportvorgängen.

Betrachtet man das Rauchgas/Suspensionsgemisch als Emulsion wird das Rauchgas als kontinuierliche Phase und die Kalksteinsuspension als disperse Phase geführt.

Übliche Rauchgasleerrohrgeschwindigkeiten in diesen Sprühtürmen liegen zwischen 2,5 und 5 m/sec.

Bei den beschriebenen Wärme- und Stofftransportvorgängen wird dem Rauchgas in der Regel Wärme entzogen, welche zur Verdampfung von Wasser aus den Suspensionstropfen führt. Das verdampfte Wasser geht in die Gasphase (kontinuierliche Phase) über und führt zu einer Sättigung des Rauchgases.

Das im Rauchgas enthaltene Schwefeldioxid SO2 wird durch Absorption in den Suspensionstropfen gelöst und reagiert infolge mit den ebenfalls gelösten Kalziumionen (Ca ++) über Zwischenstufen zu Kalziumsulfit und nach weiterer Oxidation durch den im Tropfen gelöst vorliegenden Sauerstoff zu Kalziumsulfat.

Die Suspensionstropfen fallen nach unten und nehmen entlang ihres Weges kontinuierlich Schwefeldioxid auf. Im unteren Bereich des Kontaktapparates werden sie in einem sog. Sumpf gesammelt und zur Erhöhung der Kontaktzeit durch ein Umwälzsystem erneut über die Sprühebenen mit dem Rauchgas in Kontakt gebracht.

In dem Sumpf wird überdies durch Einblasen von sauerstoffhaltigem Gas wie z.B. Luft die Suspension mit Sauerstoff für die weitere Oxidationsreaktion angereichert, sodass es bei einer optimalen Prozessführung zu einer vollständigen Oxidation des Kalziumsulfits zum Kalziumsulfat kommt.

Mit zunehmender Verweilzeit steigt der Anteil des eingebunden Kalziumsulfats im Sumpf an bis eine Übersättigung erreicht wird und nach einer Kristallisationsphase Kalziumsulfat in Form von Gips (CaSO4 2H2O) ausfällt.

Durch entsprechende Regel- und Steuerkreise wird dem Kontaktapparat kontinuierlich Kalksteinsuspension und Prozesswasser (Verdampfungsverlust der Tropfen) zudosiert sowie auch Suspension aus dem Sumpf abgezogen, sodass sich ein stationärer Zustand einstellt. Die abgezogen Suspension aus dem Sumpf wird in der Regel einer nach geschalteten Entwässerung zur Gewinnung von Gips zugeführt.

Nachteilig an der beschriebenen Rauchgaswäsche mittels Sprühturm sind die erforderlichen Abmessungen der Anlagen mit 20-40 m hohen Türmen und der vergleichsweise hohe Energieverbrauch.

Als Alternative dazu ist z.B. aus der WO 96/00122 eine Anlage bekannt, bei welcher der Kontaktapparat als sogenannte Blasensäulen ausgeführt wird. Dabei ist die Phasenzuordnung von Rauchgases und Kalksteinsuspension gegenüber der Tropfensäule im Sprühturm vertauscht, d.h. die Suspension liegt als kontinuierliche Phase und das Rauchgas als disperse Phase vor.

Es wird eine bis zu 1,1 m hohe Suspensionsschicht gebildet, in die das Rauchgas über Verteilböden wie z.B. Siebböden unter der Suspensionsschicht oder über Tauchrohre mit einer Vielzahl von Verteilbohrungen, die in die Suspensionschicht eintauchen, in Form von Blasen eingebracht wird. Dieser Apparatetyp wird daher auch als Blasenwäscher bezeichnet. Die Rauchgasleerohrgeschwindigkeit derartiger Blasenwäscher liegt allerdings nur bei etwa 1,5 bis 2,5 m/sec.

Aus dem Stand der Technik sind auch kombinierte Anlagen bekannt. US 4,820,456 A offenbart einen Waschturm, bei dem über einem Gitter aus gekreuzten Blechen eine Blasensäule gebildet wird. Darüber sind Sprühdüsen zur Bildung einen Tropfensäule angeordnet.

In US 2007/0251393 A1 ist ein im unteren Bereich mit einer flüssigen Lösung gefüllter Waschturm beschrieben. In diese Lösung wird das zu reinigende Gas mittels eines porösen Diffusers eingeblasen. Darüber sind Sprühdüsen angeordnet, um das aus der Lösung nach oben entweichende Gas zusätzlich mit einem Sprühnebel zu besprühen.

US 3,834,129 A offenbart eine Anlage mit mehreren vertikal beabstandeten perforierten Platten. Durch die Löcher in den Platten strömt Gas nach oben und wird aus Düsen mit einem Absorptionsmittel besprüht. Die Platten dienen dabei als Rückhaltevorrichtungen für einen sich bildenden Schaum.

Der Erfindung liegt die Aufgabe zugrunde, die beschriebenen Verfahren zu verbessern.

Diese Aufgabe wird erfindungsgemäß gelöst mit einer Anlage und einem Verfahren zur Absorption von Schadstoffen in Gasen bei der eine Lösung mit alkalischen Bestandteilen mit dem Gas in Kontakt gebracht wird, wobei das Gas in einer ersten Stufe als disperse Phase durch eine Suspensionsschicht und in einer zweiten Stufe als kontinuierliche Phase geführt wird, in welche die Suspension als disperse Phase eingesprüht wird und wobei die beiden Stufen in einem einzelnen Waschturm baulich vereint sind. Dabei ist in der ersten Stufe eine Dispergier- und Gasverteileinrichtung in der Weise vorgesehen, dass der freie Gasquerschnitt auf 15% bis 50% des gesamten Querschnittes des Waschturmes reduziert wird und die Dispergier- und Gasverteileinrichtung (3) aus zumindest zwei übereinander angeordneten Stab- oder Rohrrosten aufgebaut ist. Die zumindest zwei übereinander angeordneten Stab- oder Rohrroste sind vertikal voneinander beabstandet. Eine vorteilhafte Ausgestaltung der Erfindung ist im Unteranspruch 2 enthalten.

Erfindungsgemäß werden die Vorteile von Tropfen- und Blasensäule durch Kombination der beiden Verfahren in einem gemeinsamen Kontaktapparat genutzt.

Das den Waschturm von unten nach oben durchströmende Rauchgas wird in der ersten Stufe bei einer höheren Schwefeldioxid-Konzentration in einer Blasensäule gereinigt. In der zweiten Stufe erfolgt die Reinigung in einer Tropfensäule.

Damit wird die der Erfindung zugrundeliegende Erkenntnis umgesetzt, wonach ein Sprühturm mit Tropfensäule bei der Reinigung von Gasen mit vergleichsweise geringen Schwefeldioxid-Konzentrationen einem Blasenwäscher vorzuziehen ist, während bei hohen Schwefeldioxid-Konzentrationen Blasenwäscher vorteilhaft sind.

Die Erfindung wird anhand von Figuren näher erläutert. Diese zeigen beispielhaft:
Fig. 1 eine erfindungsgemäße Anlage und
Fig. 2 Ausführungsvarianten der Dispergier- und Gasverteileinrichtung

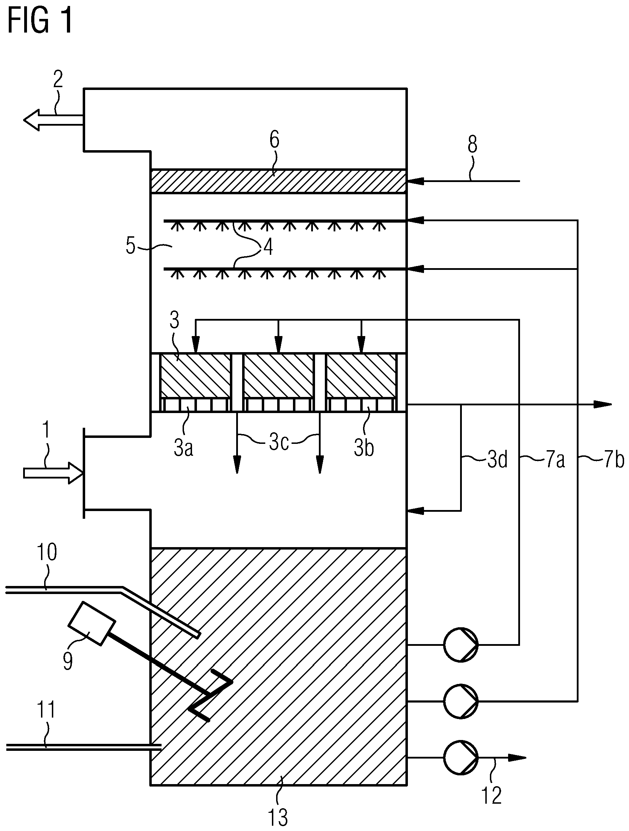

Fig. 1 zeigt einen Querschnitt durch einen zylindrischen Waschturm bei dem das Rauchgas über einen Rauchgaseintritt 1 in den Waschturm einströmt und in eine vertikale Aufwärtsströmung umgelenkt wird, wobei eine Leerrohrgeschwindigkeit von 2,5 m/s bis 4,5 m/s erreicht wird.

Durch die in diesen Bereich abtropfenden Suspensionstropfen aus der ersten Stufe der Blasenwäsche erfolgt bereits eine Rauchgasabkühlung, die im optimalen Fall bereits bis zur einer adiabaten Sättigungstemperatur des Rauchgases führt.

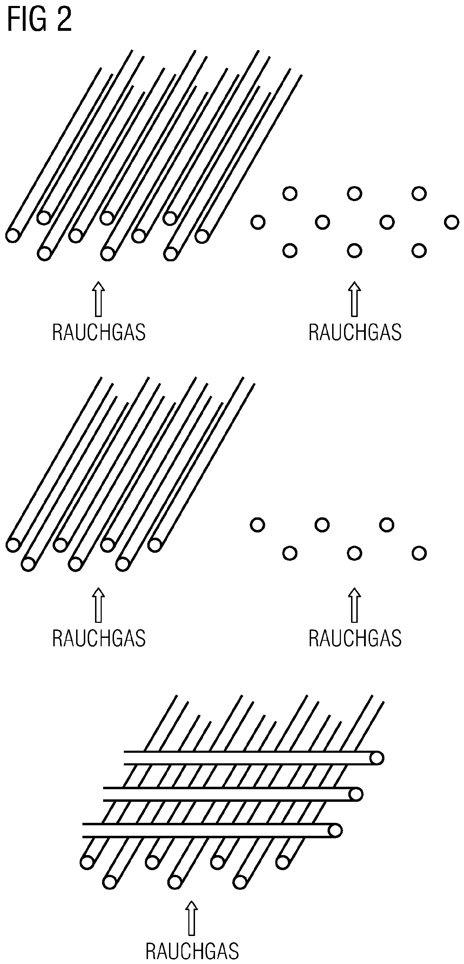

Danach tritt das Rauchgas über eine Dispergier- und Gasverteileinrichtung 3 in die Suspensionsschicht der Blasenwäsche ein. Die Gasverteilung und Blasenbildung erfolgt dabei durch eine rostartig ausgeführte Bodenkonstruktion 3a zu der vorteilhafte Ausführungsvarianten in Fig. 2 dargestellt sind.

In der Dispergier- und Gasverteileinrichtung 3 wird der freie Gasquerschnitt auf 15 % bis 50% des gesamten Wäscherquerschnitts reduziert wird. Durch die dabei erzielte Rauchgasbeschleunigung baut sich über der Dispergier- und Gasverteileinrichtung 3 eine Blasensäule auf, welche eine Höhe zwischen 0,4 m und 1,0 m erreicht. Die Höhe der Schicht wird durch eine Ablaufvorrichtung 3b beim Design des Waschturms festgelegt. Übersteigt das Niveau der sich aufbauenden Blasensäule die Designhöhe, dann läuft die Suspension über die Ablaufvorrichtung 3b und Ableitungen 3c, 3d des Wäschers primär in den Wäschersumpf 13 ab. Dabei wäre es auch denkbar, einen Teil der ablaufenden Suspension einer Entwässerungseinheit zur Gewinnung von Trockengips zuzuführen. Das die Blasensäule verlassende Rauchgas tritt nun direkt in einen sich über der Blasensäule aufbauenden Absorptionsraum 5 eines Sprühturmes bzw. eine Tropfensäule ein. Die Suspension wird über die Sprühdüsen der Sprühebenen 4 eingebracht und tritt in Tropfenform mit dem Rauchgas in Kontakt.

Beide Stufen werden durch eine Umwälzeinrichtung 7a, 7b mit frischer Suspension versorgt. Nach Passieren der letzten Sprühebene werden die vom Rauchgas mitgerissenen Tröpfchen in einer Tropfenabscheidereinrichtung 6 abgeschieden, welche regelmäßig durch eine Spüleinrichtung 8 gespült und damit ablagerungsfrei gehalten wird. Nach dem Tropfenabscheider 6 verlässt das Rauchgas über eine entsprechende Rauchgasaustrittskonstruktion 2 den Waschturm.

Die im Sumpf 13 gesammelte Suspension wird durch Einblasen von Luft 11 mit Sauerstoff für die Oxidation versorgt.

Das Absetzen von Feststoffteilchen im Sumpf wird durch Rührwerke 9 verhindert, die außerdem eine ausreichende Vermischung sicherstellen.

Um das gesamte Waschsystem in einem stationären Betrieb zu halten wird frische Kalksteinsuspension dem System zugeführt 10 und ein entsprechender Suspensionsstrom zur Gewinnung von Gips aus dem Waschsystem ausgeschleust 12.

### Liste der Bezeichnungen

- 3b: Ablaufvorrichtung
- 3c, 3d: Ableitungen
- 13: Wäschersumpf
- 5: Absorptionsraum
- 4: Sprühebenen
- 7a, 7b: Umwälzeinrichtung
- 6: Tropfenabscheidereinrichtung
- 8: Spüleinrichtung
- 6: Tropfenabscheider
- 2: Rauchgasaustrittskonstruktion
- 9: Rührwerke

## Patentansprüche

1. Anlage zur Absorption von Schadstoffen in Gasen bei der eine Lösung mit alkalischen Bestandteilen mit dem Gas in Kontakt gebracht wird, wobei eine erste Stufe vorgesehen ist, in welcher das Gas als disperse Phase durch eine Suspensionsschicht geführt ist und wobei eine zweite Stufe vorgesehen ist, in welcher das Gas als kontinuierliche Phase geführt ist, in welche die Suspension als disperse Phase eingesprüht ist und wobei die beiden Stufen in einem einzelnen Waschturm baulich vereint sind, **dadurch gekennzeichnet, dass** in der ersten Stufe eine aus zumindest zwei übereinander angeordneten, vertikal beabstandeten Staboder Rohrrosten aufgebaute Dispergier- und Gasverteileinrichtung (3) in der Weise vorgesehen ist, dass der freie Gasquerschnitt auf 15% bis 50% des gesamten Querschnittes des Waschturmes reduziert wird.

2. Anlage nach Anspruch 1, **dadurch gekennzeichnet, dass** zusätzlich vor der ersten Stufe eine Sprühebene vorgesehen wird.

3. Verfahren zur Absorption von Schadstoffen in Gasen mittels eines Waschturms, bei der eine Lösung mit alkalischen Bestandteilen mit dem Gas in Kontakt gebracht wird, wobei das Gas in einem ersten Schritt als disperse Phase durch eine Suspensionsschicht geführt wird und wobei das Gas in einem zweiten Schritt als kontinuierliche Phase geführt wird, in welche die Suspension als disperse Phase eingesprüht wird, **dadurch gekennzeichnet, dass** im ersten Schritt eine Gasverteilung und Blasenbildung mittels einer aus zumindest zwei übereinander angeordneten, vertikal beabstandeten Stab- oder Rohrrosten aufgebauten Dispergier- und Gasverteileinrichtung (3) mit einem durch diese auf 15% bis 50% des gesamten Querschnitt des Waschturmes reduzierten freien Gasquerschnitt erfolgt.

## Claims

1. System for the absorption of pollutants in gases, in which a solution having alkaline constituents is brought into contact with the gas, wherein a first stage is provided in which the gas is guided as a disperse phase through a suspension layer and wherein a second stage is provided in which the gas is guided as a continuous phase into which the suspension is sprayed as a disperse phase, and wherein the two stages are structurally combined in a single scrubbing tower, **characterized in that**, in the first stage, a dispersing and gas-distributing device (3) built up from at least two vertically spaced-apart bar or tube grates arranged above one another is provided in such a way that the free gas cross section is reduced to 15% to 50% of the total cross section of the scrubbing tower.

2. System according to Claim 1, **characterized in that** a spraying plane is additionally provided upstream of the first stage.

3. Method for the absorption of pollutants in gases by means of a scrubbing tower, in which method a solution having alkaline constituents is brought into contact with the gas, wherein, in a first step, the gas is guided as a disperse phase through a suspension layer and wherein, in a second step, the gas is guided as a continuous phase into which the suspension is sprayed as a disperse phase, **characterized in that**, in the first step, there occurs gas distribution and bubble formation by means of a dispersing and gas-distributing device (3) which is built up from at least two vertically spaced-apart bar or tube grates arranged above one another and which has a free gas cross section which is reduced by said device to 15% to 50% of the total cross section of the scrubbing tower.

## Revendications

1. Procédé de fabrication d'un raccord mural pour un cadre de fenêtre ou de porte encastré dans des murs extérieurs,
- dans une première étape de procédé, des tôles de montage (1) et des bandes d'étanchement (3) sont appliquées sur le cadre (4) sur la face frontale avec un matériau d'étanchéité (2), et les tôles de montage (1) sont fixées de préférence par engagement par correspondance de formes et par force, par exemple au moyen de vis (6), les bandes d'étanchement (3) étant collées sur la périphérie des profilés de cadre et la tôle de montage respective (1) étant montée sur le cadre (4) de telle sorte que des parties de la tôle de montage (1) forment avec la bande d'étanchement respective (3) également fixée au cadre un plan unitaire de l'étanchéité extérieure ;
- le cadre de fenêtre (4) étant ensuite inséré dans l'ouverture de fenêtre et étant assemblé à la maçonnerie ;
- les bandes d'étanchement (3) étant ensuite fixées à la maçonnerie, et
- ensuite, des parties du joint entre le cadre et la maçonnerie étant étanchéifiées en outre au moyen d'une couche bitumineuse (5), telle que des peintures bitumineuses, des bandes ou des matériaux similaires, la couche bitumineuse (5) étant disposée au moins approximativement dans le plan unitaire de l'étanchéité extérieure formé par les tôles de montage respectives (1) et les bandes d'étanchement (3), et les régions d'extrémité de la couche bitumineuse adhérant aux tôles de montage.

2. Procédé selon la revendication 1, **caractérisé en ce que** les extrémités de la couche bitumineuse (5) sont assemblées aux tôles de montage par flambage.

3. Procédé selon la revendication 1, **caractérisé en ce que** les extrémités de la couche bitumineuse (5) sont assemblées aux tôles de montage par un procédé de collage à chaud ou à froid.
